# DEMANDE DE BREVET EUROPEEN

(11) **EP 4 092 493 A1**
(43) Date de publication de la demande: **23.11.2022**
(21) Numéro de dépôt: 21175259.7
(22) Date de dépôt: 21.05.2021
(51) Int. Cl.: G04R 20/26, G04R 60/06, G04G 21/04

(54) **MONTRE COMPORTANT UN DISPOSITIF DE COMMUNICATION EN CHAMPS PROCHE**

(71) Demandeur: ETA SA Manufacture Horlogère Suisse, 2540 Grenchen (CH)
(72) Inventeur: LAGORGETTE, Pascal, 2502 Bienne (CH); STEHLIN, Xavier, 1588 Cudrefin (CH)
(74) Mandataire: ICB SA

(57) **Abrégé**

Un aspect de l'invention concerne un montre pourvue d'un boitier comprenant au moins une paire de cornes, un mouvement horloger et un module de communication en champ proche configuré pour réaliser des transactions électroniques sans contact, ledit module de communication étant connecté au mouvement en étant agencé entre les cornes de ladite au moins une paire de cornes.

## Description

### Domaine technique de l'invention

La présente invention concerne le domaine technique des montres. L'invention concerne plus particulièrement une montre comprenant un module de communication en champ proche participant à la réalisation de transactions électroniques sans contact.

L'invention concerne aussi un système de réalisation de transactions électroniques sans contact comprenant une telle montre.

### Arrière-plan technologique

Il est connu de réaliser des objets portables incorporant des modules de communication en champ proche par exemple à l'aide d'une étiquette radiofréquence. Ces modules sont composés d'une puce électronique, ou circuit intégré, reliée électriquement à une antenne. La plupart du temps, ces modules n'ont pas besoin d'une alimentation électrique autonome et sont destinés à communiquer automatiquement avec un lecteur dès qu'ils s'en approchent. Le champ électromagnétique du lecteur génère un courant induit dans l'antenne qui alimente la puce et lui permet d'émettre à son tour un signal via l'antenne.

On trouve couramment de tels dispositifs dans les cartes à puces qui permettent d'effectuer des paiements sans contact aux bornes prévues à cet effet. On connait également les demandes EP 603 721, EP 974 878, CH 690 525 ou CH 704 583 qui décrivent des montres comportant des modules de communication en champ proche dans lesquelles les antennes de ces modules sont dissimulées à différents endroits de la montre comme le cadran, la carrure, la lunette, le joint de glace ou la glace. D'autres configurations prévoient de loger l'antenne dans le fond, le mouvement ou encore le bracelet.

Toutefois, l'intégration de ces modules de communication sans contact dans une montre est souvent problématique du fait que la montre comprend un boitier disposant d'une enceinte présentant un volume d'accueil restreint. De plus, un tel boitier comprend classiquement beaucoup de parties métalliques rendant difficile un positionnement optimal de l'antenne dans son enceinte.

On comprend qu'il existe un besoin de trouver une solution, notamment qui ne présente pas les inconvénients de l'art antérieur.

### Résumé de l'invention

L'invention a pour but de pallier ces inconvénients en proposant une montre comprenant un module de communication en champ proche qui est apte à envoyer/recevoir un signal en entier et à pleine puissance tout en étant agencé dans le boitier de cette montre dont l'enceinte présente un volume d'accueil limité.

Dans ce dessein, l'invention concerne une montre pourvue d'un boitier comprenant au moins une paire de cornes, un mouvement horloger et un module de communication en champ proche configuré pour réaliser des transactions électroniques sans contact, ledit module de communication étant connecté au mouvement en étant agencé entre les cornes de ladite au moins une paire de cornes.

Dans d'autres modes de réalisation :
- le boitier comprend une carrure pourvue d'une ouverture traversante comprise entre les cornes de ladite au moins une paire de cornes, ladite ouverture étant configurée pour recevoir tout ou partie du module de communication ;
- ledit module de communication comprend un élément de support apte à obturer ladite ouverture ;
- le module de communication comprend un élément de support comportant une puce, au moins une antenne et un connecteur destiné à être relié électriquement à un microcontrôleur du mouvement horloger ;
- le module de communication comprend un substrat fixé sur une face interne d'un élément de support, ledit substrat comprenant une puce, au moins une antenne et un connecteur ;
- l'élément de support est fabriqué en au moins un matériau diélectrique et/ou électriquement non conducteur ;
- ledit mouvement horloger comprend un microcontrôleur configuré pour participer à la réalisation des transactions électroniques sans contact ;
- ledit module de communication est connecté de manière amovible audit mouvement horloger ;
- les transactions électroniques sans contact sont des paiements électroniques sans contact et/ou des authentifications/identifications électroniques sans contact du porteur de la montre.

L'invention concerne aussi un système de réalisation de transactions électroniques sans contact entre une montre et un dispositif transactionnel pourvu d'un élément de communication en champ proche et d'un microcontrôleur configuré pour commander ledit élément, la montre comprenant un module de communication en champ proche et un microcontrôleur configuré pour échanger des signaux électriques avec ce module, ladite montre et ledit dispositif étant configurés pour être connectés en champ proche l'un à l'autre pour la réalisation desdites de transactions électroniques.

### Brève description des figures

- la figure 1 est une représentation schématique d'un système de de réalisation de transactions électroniques sans contact entre une montre et un dispositif transactionnel, selon un mode de réalisation de l'invention ;
- la figure 2 est une vue en perspective de ladite montre comprenant un boitier pourvu de deux paires de cornes ledit boitier comprenant un module de communication en champ proche agencé entre les cornes d'une de ses deux paires, selon le mode de réalisation de l'invention ;
- la figure 3 est une représentation schématique du module de communication en champ proche qui est apte à participer à la réalisation de transactions électroniques sans contact, selon le mode de réalisation de l'invention, et
- les figures 4 et 5 sont des vues partielles en coupe selon l'axe IV-IV de la figure 2 qui sont présentées respectivement sous deux angles différents d'une portion du boitier dans laquelle est agencé le module de communication selon le mode de réalisation de l'invention.

### Description détaillée de l'invention

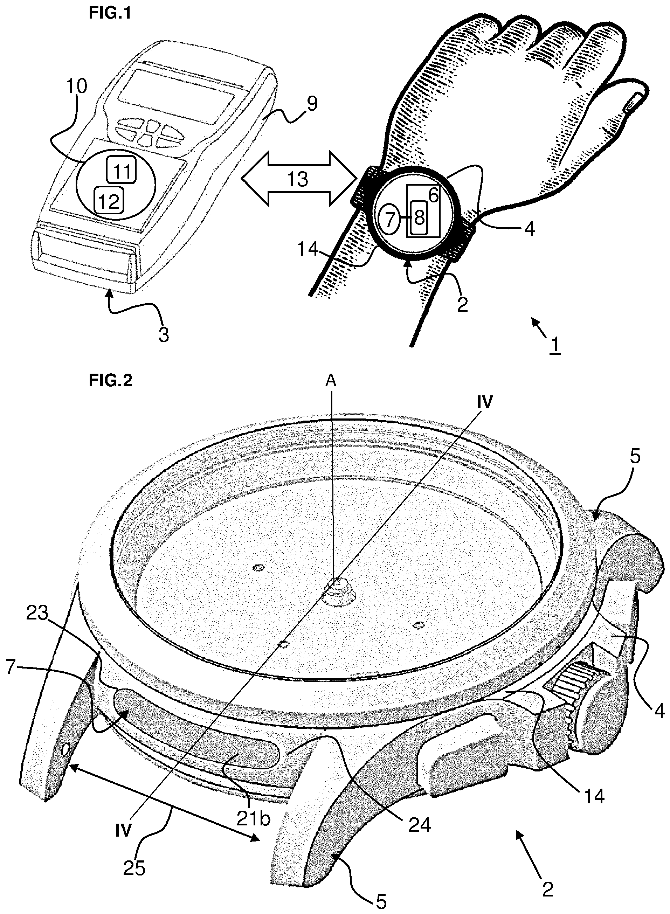

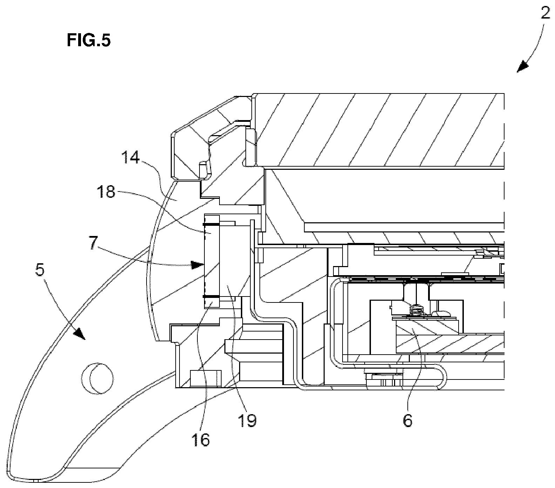

Sur la figures 1 à 5 est représentée une montre 2 telle qu'une montre électronique à quartz ou encore une montre mécanique. Nous rappelons ici qu'une montre mécanique est une montre dont le mouvement est mécanique et dont l'énergie est fournie par un ressort enroulé dans un barillet. Pour une meilleure compréhension de l'invention, dans le présent mode de réalisation, une telle montre 2 est de préférence une montre électronique 2. Cette montre électronique 2 est prévue pour réaliser des transactions électroniques sans contact telles que des transactions liées à des paiements électroniques sans contact et/ou à des authentifications/identifications électroniques sans contact du porteur de cette montre 2.

Autrement dit, une telle montre 2 est apte à participer à la mise en œuvre d'un procédé de réalisation de transactions électroniques sans contact tel que de manière non limitative et non exhaustive un procédé de paiement électronique et/ou un procédé d'authentification/d'identification du porteur de cette montre 2 et/ou un procédé de contrôle d'accès à un bâtiment/immeuble ou à un équipement/machine. Nous ne décrirons pas plus en détail de tels procédés dont le fonctionnement est bien connu de l'état de la technique.

Un tel procédé est mis en oeuvre par un système 1 innovant de réalisation de transactions électroniques sans contact représenté sur la figure 1. Un tel système 1 comprend donc un dispositif transactionnel 3 ainsi que ladite montre 2, les deux 2, 3 étant aptes à réaliser des échanges de données 13 entre eux en mettant en œuvre une technologie de communication en champ proche.

Dans ce contexte, la montre 2 comprend alors de manière non limitative et non exhaustive :
- un boitier 4 qui est pourvu d'au moins une paire de cornes 5 ;
- un module de communication 7 en champ proche ;
- un mouvement horloger 6 tel qu'un mouvement électronique comprenant un microcontrôleur 8 configuré pour échanger des signaux électriques avec le module de communication 7 en champ proche ;
- un bracelet monté sur le boitier 4 ;
- un affichage analogique et/ou numérique comprenant donc des aiguilles en particulier trois aiguilles d'affichage ;
- une interface de saisie telle qu'un écran tactile ou encore des boutons poussoirs, une couronne, etc...
- une unité d'alimentation telle qu'une pile ou une batterie/un accumulateur permettant d'alimenter en énergie le mouvement horloger 6 et en particulier le microcontrôleur 8 connecté au module de communication 7.

Sur les figures 1 et 2, le boitier 4 comporte une carrure 14 qui peut être réalisée en métal (par ex. en acier, de préférence inoxydable), en un matériau synthétique (par ex. dans un matériau composite comprenant une matrice polymère chargée de fibres, typiquement de carbone) ou en céramique. Le boitier 4 comprend aussi un fond et une glace qui participent à former avec la carrure 14, une enceinte de ce boitier 4. Une telle enceinte est configurée pour accueillir notamment le mouvement horloger 6 comprenant le microcontrôleur 8 et le module de communication 7 en champ proche. Sur la figure 1, cette carrure 14 comprend deux paires de cornes 5 sur lesquelles est destiné à venir s'accrocher un bracelet pour le port de la montre 2 au poignet.

Un tel bracelet est de préférence fabriqué en au moins un matériau diélectrique et/ou électriquement non conducteur comme par exemple un matériau synthétique (par ex. un matériau composite comprenant une matrice polymère chargée de fibres, typiquement de carbone) ou céramique ou encore plastique tel que du plastique haute performance. On notera que lorsque le bracelet est formé de maillons, les maillons qui sont directement fixés aux paires de cornes 5 sont fabriqués en au moins un matériau diélectrique et/ou électriquement non conducteur, les autres maillons pouvant être fabriqués en d'autres matériaux divers et variés. Dans ce mode de réalisation, les paires de cornes 5 sont reliées à un bracelet en élastomère venant épouser la forme de la carrure 14 pour masquer complètement une face externe 21b d'un élément de support 15 du module de communication 7 que nous décrivons par la suite.

La carrure 14 comprend aussi une ouverture 23 traversante agencée entre les cornes d'une des deux paires de cornes 5. Cette ouverture 23 est donc localisée dans l'entre-corne 25 défini dans la paire de cornes 5 située au niveau des 6 heures de la montre 2, mais elle peut aussi être positionnée dans l'entre-corne 25 de la paire de cornes 5 située au niveau des 12 heures. Cette ouverture 23 est configurée pour être traversée par tout ou partie d'un corps d'un élément de support 15 du module de communication 7. En outre, on notera que si l'on fait abstraction des paires de cornes 5, la carrure 14 présente une symétrie générale de révolution autour d'un axe central A du boitier 4.

Dans le mouvement horloger 6, le microcontrôleur 8 de cette montre 2 est apte à piloter le processus mettant en œuvre la réalisation d'une transaction électronique sans contact.

Dans le boitier 4 de cette montre 2, le module de communication 7 en champ proche est connecté au mouvement 6 en étant agencé entre les cornes de ladite au moins une paire de cornes 5. Un tel module de communication 7 permet à ladite montre 2 de pouvoir réaliser une communication bidirectionnelle avec le dispositif électronique 3 portable/ mobile ou fixe.

Plus précisément, ce module de communication 7 est relié au microcontrôleur 8 de ce mouvement 6. Dans cette configuration, le module de communication 7 en champ proche est relié/connecté de manière amovible au mouvement et donc au microcontrôleur 8.

Un tel module de communication 7 en champ proche met en œuvre par exemple des technologies de communication sans fil à courte portée et à haute fréquence de type NFC (acronyme pour « Near Field Communication » en langue anglaise signifiant « communication en champ proche »). Ce module de communication 7 fonctionne selon des technologies qui sont différentes de la RFID et du Bluetooth. Ce module de communication 7 peut par exemple fonctionner dans les bandes de fréquences relatives aux hautes fréquences HF par exemple à 13,56 MHz.

Le module de communication 7 permet ainsi la réalisation d'échange 13 de données à de courtes distances entre la montre 2 et le dispositif électronique 3. De telles distances peuvent être comprises entre environ 0 et 10 cm, et de préférence entre 0 et 5 cm. On notera que lorsque cette montre 2 est une montre mécanique le module de communication 7 peut être du type passif avec une énergie qui lui est fournie par les fréquences radio émises par l'élément de communication 12 du dispositif électronique 3. De manière alternative, le module de communication 7 de la montre 2 peut être du type actif avec une énergie qui lui est fournie par l'unité d'alimentation de la montre 2.

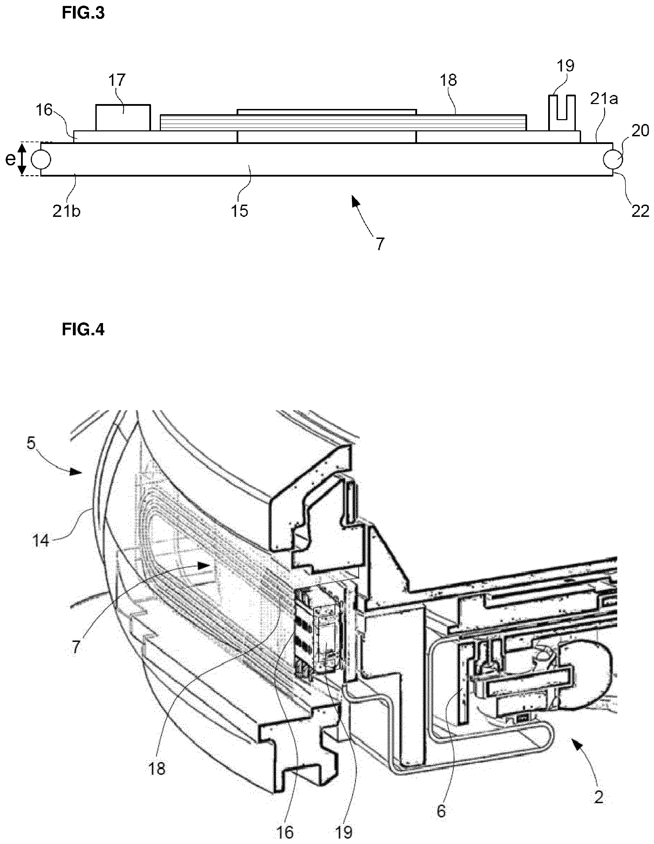

Plus précisément et en référence à la figure 3, le module de communication 7 en champ proche comprend une puce électronique 17, au moins une antenne 18 et un connecteur 19 permettant de relier ledit module 7 au microcontrôleur 8. La puce 17 qui est connectée à ladite au moins une antenne 18, comprend des éléments matériels et logiciels. Dans ce contexte, les éléments matériels et/ou logiciels de la puce 17 comportent au moins un microprocesseur coopérant avec des éléments de mémoire. Le module de communication 7 comprend aussi un substrat 16 qui est avantageusement réalisé sous la forme d'un circuit imprimé. Un tel substrat 16 aussi appelé « support » ou « plaque » est de préférence fabriqué en matière plastique haute performance ou en composites laminés. Cette matière plastique peut être un polymère tel que le polyimide connu sous le nom KaptonTM ou encore un polyester. La puce 17 et ladite au moins une antenne 18 ainsi que le connecteur 19 sont fixés par exemple par collage sur ce substrat 16.

Dans ce module de communication 7, le substrat 16 est fixé sur une face interne 21a de l'élément de support 15 évoqué précédemment. Autrement dit, cet élément de support 15 comprend le substrat 16 et bien sûr tous les autres composants formant le module de communication 7. Cet élément de support 15 présente une forme essentiellement similaire à celle de l'ouverture 23 comprise dans la carrure 14 ou strictement similaire à celle de cette ouverture 23. Un tel élément 15 comprend donc la face interne 21a et une face externe 21b, ces deux faces 21a, 21b étant reliées par une paroi périphérique 22. Une telle paroi périphérique 22 comprend une cavité s'étendant sur toute la longueur de cette paroi 22 de manière à participer à définir le contour de cet élément de support 15. Cette paroi 22 comprend aussi un élément d'étanchéité 20 avec la carrure 14 pour empêcher toute entrée de liquide tel qu'un joint torique qui est agencé dans ladite cavité. Ainsi, l'élément de support 15 vient donc obturer cette ouverture 23 de la carrure 14 et peut à cet effet être aussi appelé « élément obturateur ».

Cet élément de support 15 présente une épaisseur e qui correspond à la hauteur ou à la largeur de cette paroi périphérique 22. Cette épaisseur e est sensiblement similaire ou strictement similaire à l'épaisseur de la portion de la carrure 14 comprenant ladite ouverture 23. Autrement dit, l'ouverture 23 comprend une paroi interne délimitant/définissant la forme de cette ouverture 23 et dont l'épaisseur est sensiblement similaire ou strictement similaire à l'épaisseur e de la paroi périphérique 22 de l'élément de support 15.

Cet élément de support 15 est de préférence fabriqué en au moins un matériau diélectrique et/ou électriquement non conducteur. Il peut s'agir d'un matériau synthétique (par ex. dans un matériau composite comprenant une matrice polymère chargée de fibres, typiquement de carbone) ou en céramique ou encore en plastique tel que du plastique haute performance. On notera que la face externe 21b de cet élément de support 15 peut être de la même couleur que la face extérieure 24 de la carrure 14 et peut également présenter une texture sensiblement similaire ou strictement similaire à cette face extérieure 24.

En outre, on notera que l'agencement ici décrit du module de communication 7 entre les deux cornes d'une paire de cornes 5 de la montre 2, participe à améliorer la qualité du signal de communication bidirectionnelle en champ proche susceptible d'être reçu ou émis par ce module 7.

En outre dans un mode de réalisation, le module de communication 7 de la montre 2 peut comprendre un élément de blindage magnétique (non représenté) compris entre la puce 17 et ladite au moins une antenne 18 de ce module 7, et le mouvement 6 de la montre 2. Cet élément de blindage magnétique permet d'améliorer l'efficacité et la sensibilité de la réception/transmission de signaux radio par l'antenne 18 du module communication 7 en isolant cette antenne 18 des composantes métalliques de la montre 2 comprises dans son environnement immédiat. Autrement dit, cet élément de blindage magnétique permet d'éviter une modification du champ magnétique émis ou reçu par le module de communication 7, laquelle modification serait due à la présence de diverses composantes métalliques de la montre 2 situées dans l'environnement immédiat du module de communication 7. En complément, il est apte à pouvoir réduire l'influence négative que peuvent avoir ces composantes métalliques sur les performances du module de communication 7. Cette influence négative consisterait en l'atténuation du champ magnétique généré ou reçu par ce module de communication 7.

Dans le système 1 représenté sur la figure 1, le dispositif électronique 3 peut-être par exemple un terminal de paiement lorsque le module de communication 7 est apte à réaliser des paiements électroniques sans contact. Ce dispositif électronique 3 peut être aussi un lecteur sans contact lorsque le module de communication est apte à réaliser des authentifications/identifications électroniques sans contact du porteur de la montre par exemple afin d'accéder :
- à un bâtiment/immeuble/salle/pièce sécurisé, etc. ;
- à un service sécurisé tel qu'un service de restauration ou un service bancaire/financier, etc. ;
- à l'utilisation d'équipement/machine telle qu'une machine à café, un véhicule de transport, etc.

Un tel dispositif électronique 3 peut être par exemple un ordinateur, un ordiphone, une phablette ou encore une tablette. Ainsi que nous l'avons déjà évoqué, ce dispositif électronique 3 est apte à coopérer avec la montre 2 afin de réaliser des transactions électroniques. En référence à la figure 1, ce dispositif électronique 3 comprend un boitier 9 dans lequel un circuit électronique 10 est agencé. Ce circuit électronique 10 comporte un microcontrôleur 11 et un élément de communication 12 en champ proche, tous deux 11, 12 alimentés par une batterie. Le dispositif électronique 3 peut également comprendre une caméra et une interface de saisie telle qu'un écran tactile ou encore des boutons.

On notera que l'élément de communication 12 de ce dispositif 3 est configuré pour se connecter et échanger 13 des données avec le module de communication 7 en champ proche de la montre 2. Dans ces conditions, cet élément de communication 12 et le module de communication 7 sont alors aptes à établir entre eux une connexion en champ proche. On remarquera qu'un tel établissement de communication peut prévoir une phase d'initiation, notamment automatique, d'une connexion entre la montre 2 et le dispositif électronique 3 dès lors que cette montre 2 est localisée relativement au dispositif électronique 3 à une distance autorisant l'établissement d'une connexion en champ proche. On comprend que cette initiation de la connexion peut être réalisée manuellement ou automatiquement. Dans le cadre d'une initiation manuelle, le processus de connexion entre le module de communication 7 de la montre 2 et l'élément de communication 12 peut être réalisée à la suite d'une interaction, selon le cas, entre l'utilisateur et une interface de saisie de la montre 2, ou l'utilisateur et une interface de saisie du dispositif électronique 3. Une fois la connexion établie entre la montre 2 et le dispositif électronique 3, les transactions électroniques sans contact peuvent alors être effectuées.

On comprendra que diverses modifications et/ou améliorations et/ou combinaisons évidentes pour l'homme du métier peuvent être apportées au mode de réalisation de l'invention exposée ci-dessus sans sortir du cadre de l'invention définie par les revendications annexées.

## Revendications

1. Montre (2) pourvue d'un boitier (4) comprenant au moins une paire de cornes (5), un mouvement horloger (6) et un module de communication (7) en champ proche configuré pour réaliser des transactions électroniques sans contact, ledit module de communication (7) étant connecté au mouvement (6) en étant agencé entre les cornes de ladite au moins une paire de cornes (5).

2. Montre (2) selon la revendication précédente, **caractérisée en ce que** le boitier (4) comprend une carrure (14) pourvue d'une ouverture (23) traversante comprise entre les cornes de ladite au moins une paire de cornes (5), ladite ouverture (23) étant configurée pour recevoir tout ou partie du module de communication (7).

3. Montre (2) selon l'une quelconque des revendications précédentes, **caractérisée en ce que** ledit module de communication (7) comprend un élément de support (15) apte à obturer ladite ouverture (23).

4. Montre (2) selon l'une quelconque des revendications précédentes, **caractérisée en ce que** le module de communication (7) comprend un élément de support (15) comportant une puce (17), au moins une antenne (18) et un connecteur (19) destiné à être relié électriquement à un microcontrôleur (8) du mouvement horloger (6).

5. Montre (2) selon l'une quelconque des revendications, **caractérisée en ce que** le module de communication (7) comprend un substrat (16) fixé sur une face interne (21a) d'un élément de support (15), ledit substrat (16) comprenant une puce (17), au moins une antenne (18) et un connecteur (19).

6. Montre (2) selon l'une quelconque des revendications précédentes, **caractérisée en ce que** l'élément de support (15) est fabriqué en au moins un matériau diélectrique et/ou électriquement non conducteur.

7. Montre (2) selon l'une quelconque des revendications précédentes, **caractérisée en ce que** ledit mouvement horloger (6) comprend un microcontrôleur (8) configuré pour participer à la réalisation des transactions électroniques sans contact.

8. Montre (2) selon l'une quelconque des revendications précédentes, **caractérisée en ce que** ledit module de communication (7) est connecté de manière amovible audit mouvement horloger (6).

9. Montre (2) selon l'une quelconque des revendications précédentes, **caractérisée en ce que** les transactions électroniques sans contact sont des paiements électroniques sans contact et/ou des authentifications/identifications électroniques sans contact du porteur de la montre (2).

10. Système (1) de réalisation de transactions électroniques sans contact entre une montre (2) selon l'une quelconque des revendications précédentes et un dispositif transactionnel (3) pourvu d'un élément de communication (12) en champ proche et d'un microcontrôleur (11) configuré pour commander ledit élément (12), la montre (2) comprenant un module de communication (7) en champ proche et un microcontrôleur (8) configuré pour échanger des signaux électriques avec ce module (7), ladite montre (2) et ledit dispositif (3) étant configurés pour être connectés en champ proche l'un à l'autre pour la réalisation desdites de transactions électroniques.
